# EUROPÄISCHE PATENTSCHRIFT

(11) **EP 2 243 693 B1**
(45) Veröffentlichungstag und Bekanntmachung des Hinweises auf die Patenterteilung: **14.08.2013**
(21) Anmeldenummer: 10160722.4
(22) Anmeldetag: 22.04.2010
(51) Int. Cl.: B62K 21/12, B62K 21/26

(54) **Fahrradgriff**
Handle-bar grip
Poignée de vélo

(30) Priorität: 23.04.2009 DE 202009005939 U
(43) Veröffentlichungstag der Anmeldung: 27.10.2010
(73) Patentinhaber: RTI Sports Vertrieb von Sportartikeln GmbH, 56070 Koblenz (DE)
(72) Erfinder: Arnold, Franc, 56068 Koblenz (DE)
(74) Vertreter: von Kreisler Selting Werner

(56) Entgegenhaltungen:
- WO-A1-2005/021366
- DE-C- 425 252
- DE-U1-202007 012 180

## Beschreibung

Die Erfindung betrifft einen Fahrradgriff, insbesondere einen Fahrradgriff für Trekkingbikes und Mountainbikes.

Fahrradgriffe weisen beispielsweise eine zylindrische, insbesondere geschlitzte Hülse auf, wobei die Hülse auf dem Fahrradlenker mit Hilfe eines Klemmmittels befestigt wird. Durch das Klemmmittel erfolgt ein Zusammenpressen der geschlitzten Hülse und somit ein klemmendes Befestigen des Fahrradgriffs an dem Fahrradlenker.

Aus WO 2005/021366 ist ein Fahrradgriff bekannt, wobei ein Greifelement eine geschlitzte Hülse zum Aufstecken auf einen Fahrradlenker aufweist. Die Hülse ist mit einem Griffteil aus insbesondere weicherem Kunststoff verbunden. Ferner weist die Hülse einen Klemmbereich auf, der insbesondere an der Außenseite des Griffs vorgesehen ist. Zur Befestigung des Fahrradgriffs an dem Fahrradlenker wird ein als Haltehorn bzw. Barend ausgebildetes Klemmmittel derart angeordnet, dass ein Klemmbereich des Klemmmittels den Klemmbereich der Hülse umgibt. Mit Hilfe einer Schraube erfolgt sodann ein klemmendes Befestigen der Hülse auf dem Fahrradlenker.

Aus US 6,263,759 ist ein Fahrradgriff mit einem Haltehorn bekannt. Der Fahrradgriff weist eine auf das Lenkerende aufsteckbare Hülse aus relativ steifem Material auf, die von einem Griffteil aus weichem Material umgeben ist. Zur Lagefixierung der Hülse weist die Hülse an beiden Enden sich in Längsrichtung erstreckende Ansätze auf. Die Ansätze greifen in ebenfalls auf beiden Seiten des Fahrradgriffs angeordnete ringförmig ausgebildete Klemmmittel ein. Die beiden Klemmmittel sind ringförmig ausgebildet und weisen einen radial verlaufenden Schlitz auf. Die Klemmung erfolgt mit Hilfe einer Schraube durch Verringerung der Schlitzbreite. Das Lenkerhorn ist gesondert mit dem Lenker über eine weitere Klemmung verbunden.

Bei relativ langen Haltehörnern können, insbesondere wenn ein Mountainbike im Gelände gefahren wird, im Bereich der Klemmung hohe Kräfte und Momente auftreten. Dies kann dazu führen, dass sich das Haltehorn verdreht. Insbesondere, wenn das Haltehorn als Klemmmittel dient und eine aus Kunststoff oder dgl. vorgesehene Hülse umgibt, kann ein Kriechen des Hülsenmaterials auftreten. Ein Drehen des Haltehorns stellt ein hohes Sicherheitsrisiko dar.

Um ein Verdrehen des Haltehorns, bzw. Barends zu vermeiden, ist es aus DE 20 2007 012 180 bekannt, dass das mit dem Barend verbundene Klemmmittel zwei Klemmbereiche aufweist, wobei ein erster Klemmbereich im montierten Zustand des Barends unmittelbar mit dem Lenkerrohr verbunden ist. Hierdurch ist das Barend über den ersten Klemmbereich am Lenker klemmend fixiert. Ein zweiter sich in axialer Richtung, bzw. in Richtung des Lenkerrohres an den ersten Klemmbereich anschließender Klemmbereich dient zum Fixieren des Greifelements. Hierbei ragt eine geschlitzte Hülse des Greifelements in den zweiten Klemmbereich hinein, so dass das Greifelement über die Hülse des Greifelements klemmend gehalten ist. Hierbei kann in dem zweiten Klemmbereich eine Verzahnung vorgesehen sein, die in Längsrichtung verläuft. Durch eine derartige Axialverzahnung ist ein Verdrehen des Fahrradgriffs gegenüber dem Lenkerhorn vermieden. Dies ist insbesondere zweckmäßig, wenn es sich um einen Fahrradgriff mit einem flügelförmigen Abstützteil für die Handfläche handelt, da auf dieses erhebliche Kräfte wirken können. Auf das Abstützteil wirkende Kräfte können ein Verdrehen des Griffs auf dem Lenkerrohr hervorrufen. Dies stellt ein erhebliches Sicherheitsrisiko dar. Nachteilig bei einer derartigen Axialverzahnung ist jedoch, dass eine Feinjustage zwischen Fahrradgriff und Haltehorn nicht möglich ist. Insbesondere bei einem Fahrradgriff mit Abstützteil muss die Lage des Fahrradgriffs auf dem Lenkerrohr feinjustierbar sein. Häufig wird während der Benutzung festgestellt, dass ein geringfügiges Verdrehen des Fahrradgriffs auf dem Lenker ein besseres Fahrgefühl bewirkt und beispielsweise die Handballen weniger belastet sind und somit ein Einschlafen der Hand vermieden ist. Dies ist bei einer Axialverzahnung kompliziert, da zunächst das Haltehorn gelöst werden muss und sodann das Haltehorn und der Fahrradgriff auseinander gezogen werden müssen, um die Verzahnung um einen Zahn weiterzudrehen. Dies ist einerseits aufwändig und andererseits ist eine Feinjustage nicht möglich, da nur eine stufenweise Verstellung in Abhängigkeit des Zahnabstands möglich ist.

Aufgabe der Erfindung ist es, einen Fahrradgriff, der insbesondere für Trekkingbikes und Mountainbikes geeignet ist, zu schaffen, bei dem eine sichere Verbindung zwischen einem Greifelement und einem Zusatzgreifelement, wie einem Haltehorn bzw. Barend gewährleistet ist.

Die Lösung der Aufgabe erfolgt erfindungsgemäß durch die Merkmale des Anspruchs 1.

Der erfindungsgemäße Fahrradgriff weist ein Greifelement auf, das wie bei herkömmlichen Fahrradgriffen auf ein Lenkerrohr aufsteckbar ist. Hierbei kann das Greifelement mehrteilig ausgebildet sein und insbesondere eine Hülse aus härterem Material, insbesondere härterem Kunststoff aufweisen. Die Hülse kann hierbei von einem ebenfalls aus Kunststoff, insbesondere weicherem Kunststoff bestehenden Greifteil umgeben sein, wobei die beiden Teile des Greifelements beispielsweise durch Vulkanisieren fest mit einander verbunden sind. Sofern das Greifelement eine Hülse oder einen ähnlichen zylindrischen Ansatz aufweist, ist es bevorzugt, dass dieser in Längsrichtung des Greifelements zumindest im Randbereich geschlitzt ist. Besonders bevorzugt ist es hierbei, dass ein klemmendes Befestigen des Greifelements über den geschlitzten Bereich der Hülse bzw. den geschlitzten Ansatz erfolgt.

Der erfindungsgemäße Fahrradgriff weist zusätzlich zu dem Greifelement ein Zusatzgreifelement auf, bei dem es sich insbesondere um ein Haltehorn bzw. Barend handelt. Das Zusatzgreifelement ist in einem Winkel zum Greifelement angeordnet. Der Winkel ist größer 0° und kleiner 180° und ist üblicherweise in dem Bereich von 45° bis 135°. Bei dem erfindungsgemäßen Fahrradgriff ist das Zusatzgreifelement mit einem Klemmmittel verbunden, wobei das Klemmmittel vorzugsweise unlösbar mit dem Zusatzgreifelement verbunden oder einstückig mit dem Zusatzgreifelement ausgebildet ist. Vorzugsweise weist das Klemmmittel einen sich in Längsrichtung, vorzugsweise sich über diesen Bereich des Klemmmittels erstreckenden Schlitz auf. Das Erzeugen der Klemmkraft erfolgt vorzugsweise durch ein Klemmelement, wie eine Schraube, die im Bereich des Schlitzes angeordnet ist, wobei durch Anziehen der Schraube ein Verringern der Schlitzbreite und somit ein Verringern des Durchmessers des Klemmmittels erfolgt. Bei dem Klemmelement kann es sich beispielsweise auch um eine Rastverbindung, ein wie ein Kniehebel funktionierendes Hebelelement und dergleichen handeln.

Erfindungsgemäß weist das Klemmmittel einen ersten Klemmbereich und einen zweiten Klemmbereich auf. Der erste, sich insbesondere in Längsrichtung, das heißt in Richtung des Lenkerrohrs, erstreckende Klemmbereich dient zur, vorzugsweise unmittelbaren Verbindung des Zusatzgreifelements bzw. des Barends mit dem Lenkerrohr. Hierbei erfolgt eine klemmende Befestigung insbesondere an der Außenseite des Lenkerrohrs. Der erste Klemmbereich ist somit in bevorzugter Ausführungsform ringförmig ausgebildet. Bei einem beispielsweise vollständig aus Metall hergestellten Zusatzgreifelement mit integriertem Klemmmittel liegt somit ein metallischer Klemmbereich beispielsweise an einer Außenseite des Lenkerohrs, das ebenfalls aus Metall hergestellt ist, an. Hierdurch können hohe Klemmkräfte realisiert werden. Dies ist insbesondere bei langen Barends erforderlich, um bei hohen Belastungen, wie beispielsweise beim Fahren im Gelände, ein Verdrehen des Barends auf dem Lenker zu vermeiden. Lange Barends weisen insbesondere eine Länge von mehr als 10 cm, ggf. sogar mehr als 14 cm auf.

Ggf. ist das Zusatzgreifelement aus unterschiedlichen Materialien hergestellt, wobei es bevorzugt ist, dass das Klemmmittel als Metallteil ausgebildet ist, das mit einem aus Kunststoff hergestelltem Barend verbunden ist. Ggf. können an der Außenseite des Barends noch Bereiche aus weicherem Material, beispielsweise weicherem Kunststoff vorgesehen sein.

Der erfindungsgemäß vorgesehene zweite Klemmbereich des Klemmmittels ist mit dem Greifelement vorzugsweise einer Hülse des Greifelements verbunden. Durch die Verbindung des Greifelements über den zweiten Klemmbereich mit dem Zusatzgreifelement, wie dem Barend, ist ein Halten des Greifelementes realisiert. Dies hat den Vorteil, dass über ein einziges Klemmmittel nicht nur das Zusatzgreifelement, sondern auch das Greifelement selbst am Lenkerrohr fixiert ist.

Erfindungsgemäß ist zwischen dem Greifelement und dem Zusatzgreifelement im zweiten Klemmbereich ein Sicherungselement angeordnet, das in zwei einander gegenüberliegende Ausnehmungen ragt. Durch Vorsehen eines Sicherungselements kann insbesondere ein seitliches Verschieben des Greifelements, das heißt ein Verschieben des Greifelements bezogen auf den Lenker nach innen, vermieden werden. Durch das Sicherungselement erfolgt in bevorzugter Ausführungsform eine formschlüssige Verbindung zwischen dem Klemmmittel und dem Greifelement und somit zwischen dem Zusatzgreifelement und dem Greifelement.

Bei einer besonders bevorzugten Ausführungsform der Erfindung ist in montiertem Zustand zwischen dem Sicherungselement und dem Greifelement und/oder dem Sicherungselement und dem Klemmmittel in Längsrichtung ein Hinterschnitt vorgesehen. In Längsrichtung des Fahrradgriffs bzw. in Längsrichtung des Lenkerrohrs ist somit mindestens eine Stufe vorgesehen, die den entsprechenden Hinterschnitt realisiert. Hierdurch ist auf einfache Weise vermieden, dass eine Relativbewegung zwischen Zusatzgreifelement und Greifelement in Längsrichtung erfolgt. Insbesondere ist vermieden, dass das Greifelement aus dem Klemmmittel des Zusatzgreifelements herausrutscht. Insbesondere wenn es sich bei dem Greifelement um ein Greifelement mit flügelförmigem Ansatz zum Abstützen der Handfläche handelt, wäre ein derartiges Herausrutschen in axialer Richtung gefährlich, da sich das Greifelement sodann auf dem Lenker verdrehen kann. Dies würde ein Sicherheitsrisiko darstellen, das durch die erfindungsgemäße Ausgestaltung des Fahrradgriffs vermieden ist.

Ein weiterer Vorteil des Vorsehens eines Sicherungselements, der unabhängig von dem Verhindern einer Axialverschiebung ist, besteht darin, dass bei der Montage die Lage zwischen Greifelement und Zusatzgreifelement eindeutig definiert werden kann. Hierbei ist das Sicherungselement derart ausgebildet, bzw. wirkt derart mit dem Klemmmittel und/oder dem Greifelement zusammen, dass ein hörbares Einrasten oder dergleichen erfolgt. Dies hat bei der Montage den Vorteil, dass zunächst das Greifelement auf das Lenkerohr aufgesteckt und sodann von außen das Zusatzgreifelement bzw. das Barend aufgesteckt wird, bis das Sicherungselement beispielsweise hörbar einrastet. Hierdurch ist gewährleistet, dass sich das Greifelement und das Zusatzgreifelement im zweiten Klemmbereich vollständig überdecken und somit das Greifelement sicher mit dem Zusatzgreifelement verbindbar ist. Ferner ist es möglich, dass Greifelement vor dem Aufstecken des Zusatzgreifelements auf das Lenkerrohr derart in seiner Lage auf dem Lenkerrohr zu justieren, dass das Lenkerrohr um eine definierte Länge über das Greifelement vorsteht. Beim Verbinden, insbesondere bei dem hörbaren Einrasten des Sicherungselements ist somit ferner sichergestellt, dass der erste Klemmbereich vollständig an der Außenseite des Lenkerrohrs anliegt und somit die maximal zur Verfügung stehende Klemmfläche des ersten Klemmbereichs genutzt wird. Hierdurch ist gewährleistet, dass die hohen, im ersten Klemmbereich auftretenden Kräfte und Momente auf das Lenkerrohr übertragen werden. Sollte die Klemmfläche im ersten Klemmbereich nicht vollständig ausgenutzt werden, könnten nur geringe Kräfte und Momente übertragen werden. Dies kann sodann zu einem Verdrehen des Zusatzgreifelements bzw. des Barends bei hohen Belastungen führen.

In besonders bevorzugter Ausführungsform handelt es sich bei dem Sicherungselement um ein gesondertes Bauteil, das heißt um ein Bauteil, das nicht fest oder einstückig mit dem Klemmmittel oder dem Greifelement verbunden ist. Insbesondere ist das Sicherungselement teilringförmig ausgebildet, wobei es sich insbesondere um einen geschlitzten Metallring handelt. Ein derartiges Bauteil ist einfach herzustellen und leicht.

Das insbesondere ringförmig ausgebildete Sicherungselement ragt in montiertem Zustand in eine in bevorzugter Ausführungsform ebenfalls ringförmige Ausnehmung ein, die im zweiten Klemmbereich des Klemmmittels vorgesehen ist. Bei einem nicht ringförmig ausgebildeten Sicherungselement sind entsprechend eine oder mehrere an die Form des Sicherungselements angepasste Ausnehmungen vorgesehen. Bevorzugt ist es, dass eine weitere Ausnehmung im Greifelement vorgesehen ist, wobei diese in bevorzugter Ausführungsform ebenfalls ringförmig ist und der ringförmigen Ausnehmung im Klemmmittel gegenüber liegt. Das vorzugsweise ringförmig ausgebildete Sicherungselement ragt somit im montierten Zustand in die beiden ringförmigen Ausnehmungen, bzw. Nuten.

Ebenso kann das Sicherungselement einstückig mit dem Klemmmittel oder dem Greifelement ausgebildet bzw. mit diesem fest verbunden sein. Hierbei ist es möglich, das Sicherungselement in Form eines Rastelements oder als Lasche auszubilden. In montiertem Zustand ragt die Lasche beispielsweise sodann in eine gegenüberliegende Nut. Insbesondere rastet die Lasche in die Nut in montiertem Zustand ein. Dieses Einrasten kann wiederum derart erfolgen, dass es für den Benutzer bei der Montage hörbar ist, so dass eine sichere Montage gewährleistet ist. Insbesondere handelt es sich bei dieser Ausführungsform um mehrere einzelne, entlang eines Rings bzw. entlang des Umfangs angeordnete Laschen bzw. Rastelemente, die jeweils mit dem entsprechenden Bauteil verbunden oder einstückig ausgebildet sind und in eine gegenüberliegende Nut in montiertem Zustand einrasten.

Das Greifelement weist in bevorzugter Ausführungsform einen insbesondere zylindrischen Ansatz auf, der in den zweiten Klemmbereich ragt, insbesondere den zweiten Klemmbereich vollständig überdeckt. Bei dem zylindrischen Ansatz kann es sich um eine, insbesondere aus härterem Material wie härterem Kunststoff, bestehende Hülse handeln, die sich vorzugsweise über die gesamte Länge des Greifelements erstreckt.

Besonders bevorzugt ist es, dass im montierten Zustand eine Öffnung des Lenkerrohrs durch ein Abdeckelement verschlossen ist. Erfindungsgemäß bevorzugt ist es hierbei, dass das Abdeckelement mit dem Klemmmittel bzw. dem Zusatzgreifelement verbunden, insbesondere einstückig ausgebildet ist. Insbesondere bei einstückiger Ausgestaltung ist ein Verlieren des Abdeckelements beispielsweise bei einem Sturz vermieden. Aufgrund des Vorsehens eines Sicherungselements ist es möglich, das Abdeckelement einstückig mit dem Zusatzgreifelement auszubilden, da es nicht erforderlich ist bei der Montage von außen kontrollieren zu können, ob das Zusatzgreifelement vollständig auf das Lenkerrohr aufgesteckt ist. Eine entsprechende Gewährleistung der richtigen Montage ist durch das Sicherungselement in bevorzugter Ausführungsform akustisch gegeben.

Insbesondere bei einem ringförmigen, beispielsweise gesondert ausgebildeten Sicherungselement besteht der weitere Vorteil, dass eine Feinjustage zwischen dem Zusatzgreifelement und dem Greifelement möglich ist. So können beide Elemente unabhängig voneinander auf dem Lenkerrohr verdreht werden und somit hinsichtlich der Lage zueinander also auch der jeweils einzelnen Anordnung, die für den Benutzer angenehm ist, justiert werden. Diese Feinjustage kann in einem Zustand erfolgen, in dem der Griff vollständig montiert ist. Der Griff kann beispielsweise bereits geringfügig über das Klemmelement, wie beispielsweise einer Schraube, fixiert sein, sodass sowohl das Zusatzgreifelement als auch das Greifelement nur noch schwer auf dem Lenker gedreht werden können. Eine vollständige Demontage zum Verändern der Lage des Zusatzgreifelements sowie der des Greifelements auf dem Lenkerrohr ist nicht erforderlich.

Nachfolgend wird die Erfindung anhand einer bevorzugten Ausführungsform unter Bezugnahme auf die anliegenden Zeichnungen näher erläutert.

Es zeigen:
- Fig. 1: eine schematische Draufsicht einer bevorzugten Ausführungsform des erfindungsgemäßen Fahrradgriffs vor der Montage,
- Fig. 2: eine schematische Draufsicht des Sicherungselements,
- Fig. 3: eine schematische Draufsicht des Fahrradgriffs in montiertem Zustand, und
- Fig. 4: eine schematische Seitenansicht des Zusatzgreifelements in Richtung des Pfeils IV in Fig. 3.

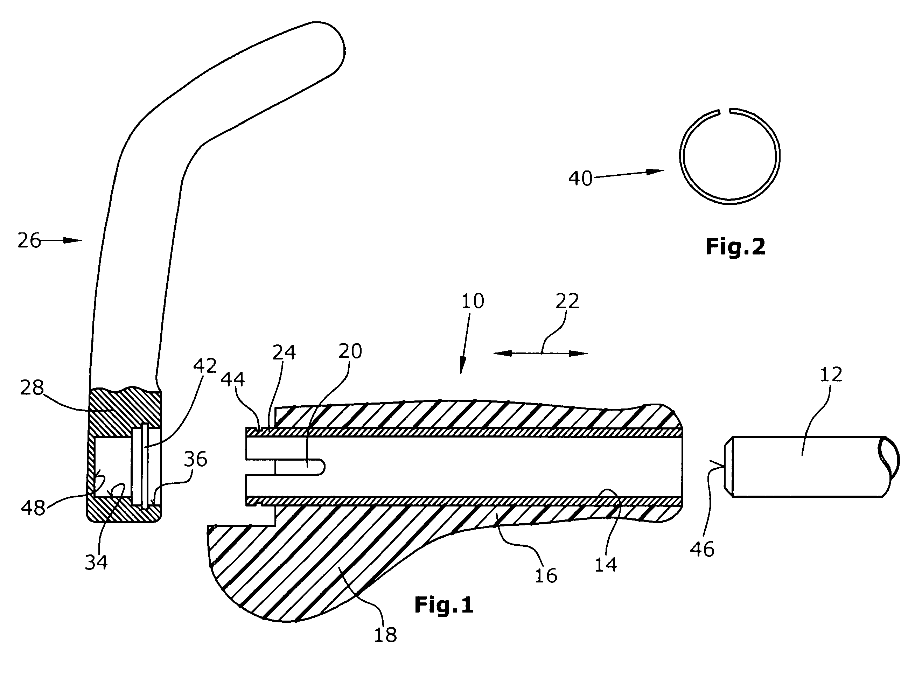

Der erfindungsgemäße Fahrradgriff weist ein Greifelement 10 auf, das auf ein Lenkerrohr 12 aufsteckbar ist. Im dargestellten Ausführungsbeispiel weist das Greifelement 10 eine Hülse 14 auf, die insbesondere aus härterem Kunststoff hergestellt ist. Mit der Hülse 14 ist ein die Hülse 14 umgebendes Greifteil 16 verbunden, wobei das Greifteil 16 beispielsweise durch Vulkanisieren fest mit der Hülse 14 verbunden ist. Im dargestellten Ausführungsbeispiel weist das Greifteil 16 einen Ansatz 18 auf, der in Richtung des Fahrers weist. Der flügelförmige Ansatz 18 dient zum Abstützen des Handballens. Ferner weist die Hülse 14 einen Schlitz 20 auf, der sich in Längsrichtung 22 des Greifelements 10 erstreckt. Der Schlitz 20 ist auf der im montierten Zustand nach außen, in Fig. 1 nach links weisenden Seite der Hülse 14 vorgesehen. Der Schlitz 20 erstreckt sich hierbei in Längsrichtung über einen zylindrischen Ansatz 24 der Hülse 14 der aus dem Greifteil 16 vorsteht. Im dargestellten Ausführungsbeispiel ragt der Schlitz 20 noch in den Bereich der Hülse 14 hinein, der von dem Greifteil 16 umgeben ist.

Der vorstehende zylindrische Ansatz 24 dient zum klemmenden Befestigen des Greifelements 10 auf dem Lenkerrohr 12.

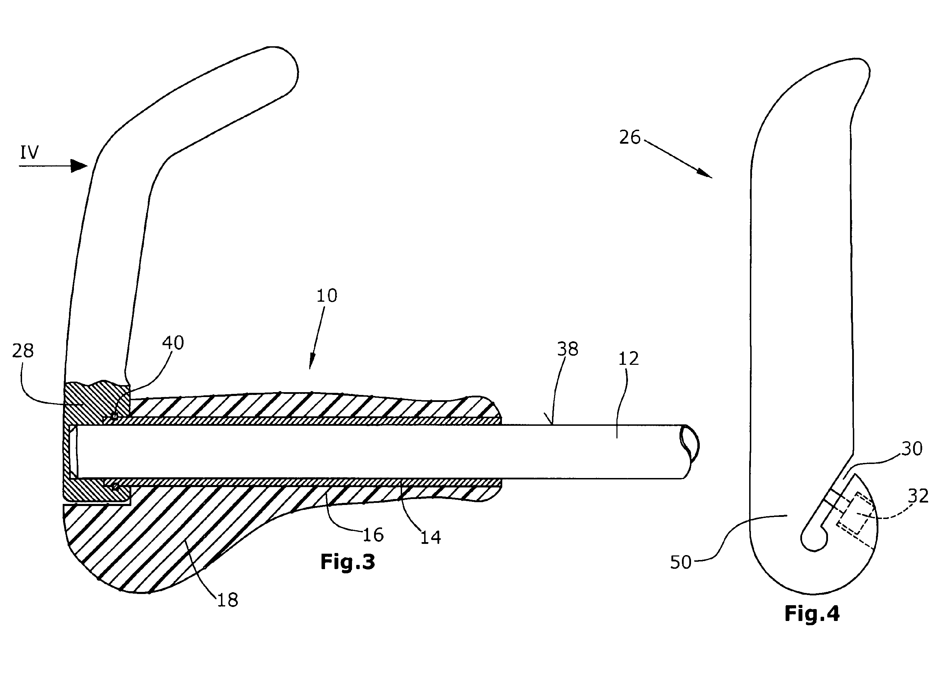

Zum klemmenden Befestigen des Greifelements 10 auf dem Lenkerrohr 12 ist im dargestellten Ausführungsbeispiel ein Zusatzgreifelement 26, wie ein Barend, mit einem Klemmmittel 28 verbunden, bzw. einstückig ausgebildet. Das Klemmmittel 28 ist ähnlich einer Schelle ausgebildet und umgibt im montierten Zustand das Lenkerrohr 12 annähernd vollständig. Das Klemmmittel weist einen Schlitz 30 (Fig. 4) auf. Zum Erzeugen der Klemmkraft wird ein Klemmelement wie eine Schraube 32 angezogen. Hierdurch verringert sich die Schlitzbreite und somit der Innendurchmesser des Klemmmittels 28.

Das Klemmmittel 28 weist einen ersten Klemmbereich 34 (Fig. 1) sowie einen zweiten Klemmbereich 36 auf. In montiertem Zustand (Fig. 3) liegt der erste Klemmbereich 34 unmittelbar an einer Außenseite 38 des Lenkerrohrs 12 an. Hierdurch erfolgt eine unmittelbare klemmende Befestigung des Barends 26 an dem Lenkerrohr 12. Beispielsweise bei einem vollständig aus Metall hergestelltem Barend 26 ist es hierdurch möglich, hohe Klemmkräfte aufzubringen. Ebenso kann das Zusatzgreifelement 26 mehrteilig ausgebildet sein, so dass der in Fig. 1 obere Teil des Barends 26 der von dem Lenkerrohr 12 wegführt, beispielsweise aus Kunststoff hergestellt ist und ein mit diesem Teil verbundenes Klemmmittel aus Metall vorgesehen ist.

Der zweite Klemmbereich 36, der entsprechend des ersten Klemmbereichs 34 zylindrisch ausgebildet ist, weist einen größeren Innendurchmesser als der erste Klemmbereich 34 auf. Der Innendurchmesser des zweiten Klemmbereichs 36 entspricht im Wesentlichen dem Außendurchmesser des zylindrischen Ansatzes 24 der Hülse 14. Die Breite des zweiten Klemmbereichs 36 entspricht im Wesentlichen der Länge um die der Ansatz 24 gegenüber dem Greifteil 16 vorsteht.

Zur Aufnahme eines als geschlitzten Metallring (Fig. 2) ausgebildeten Sicherungselements 40 ist im dargestelltem Ausführungsbeispiel sowohl im zweiten Klemmbereich 36 eine ringförmige Ausnehmung bzw. Nut 42 als auch in dem Ansatz 24 eine ringförmig ausgebildete Nut 44 vorgesehen. In montiertem Zustand liegen die beiden Nuten 42, 44 einander gegenüber (Fig. 3) und nehmen den Sicherungsring 40 auf.

Zur Montage wird somit in einem ersten Schritt das Greifelement 10 auf das Lenkerrohr 12 aufgesteckt, so dass das Lenkerrohr 12 gegenüber dem Ansatz 24 der Hülse 14 vorsteht. Hierbei steht das Lenkerrohr 12 über den Ansatz 24 um einen Betrag vor, der der Breite des ersten Klemmbereichs 34 entspricht.

Im nächsten Schritt wird das Sicherungselement 40, das geringfügig aufgebogen ist, in die Nut 42 in dem ersten Klemmbereich eingesetzt. Anschließend erfolgt ein Aufstecken des Zusatzgreifelements 26 auf das über den Ansatz 24 vorstehende Ende des Lenkerrohrs 12 sowie auf die Ansatz 24. Sobald das Zusatzgreifelement 26 vollständig aufgesteckt ist, schnappt der Sicherungsring 40 in die Nut 44 des zylindrischen Ansatzes 24. Gleichzeitig stößt eine Außenseite 46 des Lenkerrohrs 12 an eine Innenseite 48 (Fig. 1) des Klemmmittels.

Die Innenseite 48 des Klemmmittels ist durch ein Abdeckelement 50 (Fig. 4) gebildet, das im dargestellten Ausführungsbeispiel einstückig mit dem Zusatzgreifelement ausgebildet ist. Bei einem aus mehreren Materialien hergestelltem Zusatzgreifelement, bei dem insbesondere der obere bzw. vom Lenkerrohr 12 wegstehende Teil aus Kunststoff hergestellt ist, ist das Abdeckelement 50 vorzugsweise ebenfalls aus Kunststoff ausgebildet und einstückig mit diesem Teil des Zusatzgreifelements 26 hergestellt.

## Patentansprüche

1. Fahrradgriff, insbesondere für Trekkingbikes oder Mountainbikes, mit
einem auf ein Lenkerrohr (12) steckbaren Greifelement (10),
einem in einem Winkel zum Greifelement (10) angeordneten Zusatzgreifelement (26) und
einem mit dem Zusatzgreifelement (26) verbundenen Klemmmittel (28),
wobei das Klemmmittel (28) einen ersten Klemmbereich (34) zum Verbinden mit dem Lenkerrohr (12) und einen zweitem Klemmbereich (36) zum Verbinden mit dem Greifelement (10) aufweist,
wobei zwischen dem Greifelement (10) und dem Klemmmittel (28) im zweiten Klemmbereich (36) ein Sicherungselement (40) angeordnet ist,
**dadurch gekennzeichnet, dass**
das Sicherungselement (40) in zwei einander gegenüberliegende Ausnehmungen (42, 44) ragt.

2. Fahrradgriff nach Anspruch 1, **dadurch gekennzeichnet, dass** im montiertem Zustand durch das Sicherungselement (40) eine formschlüssige Verbindung zwischen dem Greifelement (10) und dem Klemmmittel (28) erfolgt.

3. Fahrradgriff nach Anspruch 1 oder 2, **dadurch gekennzeichnet, dass** im montierten Zustand zwischen dem Sicherungselement (40) und dem Greifelement (10) und/oder zwischen dem Sicherungselement (40) und dem Klemmmittel (28) in Längsrichtung ein Hinterschnitt gegeben ist.

4. Fahrradgriff nach einem der Ansprüche 1 bis 3, **dadurch gekennzeichnet, dass** das Sicherungselement (40) als gesondertes Bauteil ausgebildet ist.

5. Fahrradgriff nach einem der Ansprüche 1 bis 4, **dadurch gekennzeichnet, dass** das Sicherungselement (40) teilringförmig ausgebildet ist.

6. Fahrradgriff nach einem der Ansprüche 1 bis 5, **dadurch gekennzeichnet, dass** das Sicherungselement (40) als geschlitzter Metallring ausgebildet ist.

7. Fahrradgriff nach einem der Ansprüche 1 bis 6, **dadurch gekennzeichnet, dass** das Klemmmittel (28) im zweiten Klemmbereich (36) eine vorzugsweise kreisringförmige Ausnehmung (42) aufweist, in das Sicherungselement (40) in montiertem Zustand ragt.

8. Fahrradgriff nach einem der Ansprüche 1 bis 7, **dadurch gekennzeichnet, dass** das Greifelement (10) eine vorzugsweise ringförmige Ausnehmung (44) aufweist, in die das Sicherungselement (40) in montiertem Zustand ragt.

9. Fahrradgriff nach einem der Ansprüche 1 bis 8, **dadurch gekennzeichnet, dass** das Greifelement (10) einen zylindrischen Ansatz (24) aufweist, der in montiertem Zustand in den zweiten Klemmbereich (36) ragt, vorzugsweise den zweiten Klemmbereich (36) vollständig überdeckt.

10. Fahrradgriff nach Anspruch 9, **dadurch gekennzeichnet, dass** der zylindrische Ansatz (24) Teil einer sich vorzugsweise über die gesamte Länge des Greifelements (10) erstreckenden Innenhülse (14) ist.

11. Fahrradgriff nach einem der Ansprüche 1 bis 10, **gekennzeichnet durch** ein vorzugsweise einstückig mit dem Zusatzgreifelement (26) ausgebildeten Abdeckelement (50), zum Abdecken einer Öffnung des Lenkerrohrs im montierten Zustand.

## Claims

1. A bicycle handlebar grip, particularly for trekking bikes and mountain bikes, comprising
a grip element (10) to be mounted on a handlebar tube (12),
an additional grip element (26) arranged at an angle to the grip element (10), and
a clamping means (28) attached to said additional grip element (26), said clamping means (28) comprising a first clamping region (34) for connection to the handlebar tube (12) and a second clamping region (36) for connection to the grip element (10),
a securing element (40) being arranged between the grip element (10) and the clamping means (28) in said second clamping region (36),
**characterized in that**
said securing element (40) extends into two mutually opposite recesses (42,44).

2. The bicycle handlebar grip according to claim 1, **characterized in that**, in the assembled state, said securing element (40) is effective to provide a form-locking connection between the grip element (10) and the clamping means (28).

3. The bicycle handlebar grip according to claim 1 or 2, **characterized in that**, in the assembled state, an undercut exists in the longitudinal direction between the securing element (40) and the grip element (10) and/or between the securing element (40) and the clamping means (28).

4. The bicycle handlebar grip according to any one of claims 1 to 3, **characterized in that** the securing element (40) is formed as a separate component.

5. The bicycle handlebar grip according to any one of claims 1 to 4, **characterized in that** the securing element (40) is formed as a partial ring.

6. The bicycle handlebar grip according to any one of claims 1 to 5, **characterized in that** the securing element (40) is formed as a slotted metal ring.

7. The bicycle handlebar grip according to any one of claims 1 to 6, **characterized in that** the clamping means (28) comprises, in the second clamping region (36), a preferable part-ring-shaped recess (42) having the securing element (40) projecting thereinto in the assembled state.

8. The bicycle handlebar grip according to any one of claims 1 to 7, **characterized in that** the grip element (10) comprises a preferably ring-shaped recess (44) having the securing element (40) projecting thereinto in the assembled state.

9. The bicycle handlebar grip according to any one of claims 1 to 8, **characterized in that** the grip element (10) comprises a cylindrical projection (24) which in the assembled state extends into the second clamping region (36) and preferably fully covers the second clamping region (36).

10. The bicycle handlebar grip according to claim 9, **characterized in that** said cylindrical projection (24) is a part of an inner sleeve (14) extending preferably along the complete length of the grip element (10).

11. The bicycle handlebar grip according to any one of claims 1 to 10 **characterized by** a cover element (50) for covering an opening of the handlebar tube in the assembled state, said cover element being preferably formed integrally with the additional grip element (26).

## Revendications

1. Poignée de bicyclette, en particulier pour vélos de randonnée ou vélos tous terrains, comportant
un élément de préhension (10), pouvant être enfiché dans un tube de guidon (12),
un élément de préhension additionnel (26), disposé selon un certain angle par rapport à l'élément de préhension (10), et
un moyen de serrage (28), assemblé à l'élément de préhension additionnel (26),
le moyen de serrage (28) comportant une première zone de serrage (34) à relier au tube de guidon (12) et une deuxième zone de serrage (36) à relier à l'élément de préhension (10),
un élément d'arrêt (40) étant disposé entre l'élément de préhension (10) et le moyen de serrage (28) dans la deuxième zone de serrage (36),
**caractérisée en ce que** l'élément d'arrêt (40) dépasse dans deux évidements (42, 44) opposés mutuellement.

2. Poignée de bicyclette selon la revendication 1, **caractérisée en ce que**, à l'état monté, l'élément d'arrêt (40) réalise un assemblage par liaison avec correspondance de forme entre l'élément de préhension (10) et le moyen de serrage (28).

3. Poignée de bicyclette selon la revendication 1 ou 2, **caractérisée en ce que**, à l'état monté, il y a une contre-dépouille dans la direction longitudinale entre l'élément d'arrêt (40) et l'élément de préhension (10) et/ou entre l'élément d'arrêt (40) et le moyen de serrage (28).

4. Poignée de bicyclette selon l'une des revendications 1 à 3, **caractérisée en ce que** l'élément d'arrêt (40) est conçu en tant que composant distinct.

5. Poignée de bicyclette selon l'une des revendications 1 à 4, **caractérisée en ce que** l'élément d'arrêt (40) est conçu sous la forme d'un anneau partiel.

6. Poignée de bicyclette selon l'une des revendications 1 à 5, **caractérisée en ce que** l'élément d'arrêt (40) est conçu sous la forme d'une bague métallique fendue.

7. Poignée de bicyclette selon l'une des revendications 1 à 6, **caractérisée en ce que** l'élément de serrage (28) présente dans la deuxième zone de serrage (36) un évidement (42) de préférence en forme d'anneau circulaire, dans lequel, à l'état monté, l'élément d'arrêt (40) dépasse.

8. Poignée de bicyclette selon l'une des revendications 1 à 7, **caractérisée en ce que** l'élément de préhension (10) présente un évidement (44) de préférence annulaire, dans lequel, à l'état monté, l'élément d'arrêt (40) dépasse.

9. Poignée de bicyclette selon l'une des revendications 1 à 8, **caractérisée en ce que** l'élément de préhension (10) présente un emboîtement cylindrique (24), qui, à l'état monté, dépasse dans la deuxième zone de serrage (36), de préférence qui recouvre complètement la deuxième zone de serrage (36).

10. Poignée de bicyclette selon la revendication 9, **caractérisée en ce que** l'emboîtement cylindrique (24) fait partie d'un manchon intérieur (14) s'étendant de préférence sur toute la longueur de l'élément de préhension (10).

11. Poignée de bicyclette selon l'une des revendications 1 à 10, **caractérisée par** un élément de recouvrement (50), configuré de préférence d'un seul tenant avec l'élément de préhension additionnelle (26), pour recouvrir à l'état monté une ouverture du tube de guidon.
